# EUROPEAN PATENT SPECIFICATION

(11) **EP 1 064 145 B1**
(45) Date of publication and mention of the grant of the patent: **21.11.2001**
(21) Application number: 99901713.0
(22) Date of filing: 20.01.1999
(51) Int. Cl.: B29C 65/72, B29C 65/68, B29C 65/66, B29C 65/36, F16L 47/02, B29C 63/00, B29C 63/42

(54) **METHOD OF JOINING PLASTICS PIPES BY HEAT FUSION**
WARMSCHMELZVERFAHREN ZUM VERBINDEN VON KUNSTSTOFFROHREN
PROCEDE D'ASSEMBLAGE DE TUYAUX EN PLASTIQUE PAR FUSION THERMIQUE

(30) Priority: 28.01.1998 GB 9801735
(43) Date of publication of application: 03.01.2001
(73) Proprietor: Uponor Innovation AB, 513 81 Fristad (SE)
(72) Inventor: HARGET, David, Charles, Wollaton, Nottingham NG8 2QG (GB); JARVENKYLA, Jyri, Jaakko, FIN-15870 Hollola (FI)
(74) Representative: Hall, Robert Leonard
(86) International application number: GB9900047
(87) International publication number: WO9938669

(56) References cited:
- EP-A- 0 513 391
- DE-A- 3 741 964
- JP-A- 3 244 527
- US-A- 4 386 629

## Description

This invention relates to the joining of plastics pipes, and more particularly to an improved method for the joining of plastics pipes by heat fusion and to pipe joints produced thereby.

The joining of plastics pipes using heat fusion fittings comprising in-line couplings, T-joints, bends, saddle fittings, patches and similar devices has been known for many years. In a typical heat fusion fitting, an electrical resistance heater element is embedded in the inner surface of a sleeve of a thermoplastic polymeric material, the sleeve being adapted to fit over a plastic pipe or pipes to be connected. Such fittings are conventionally termed electrofusion fittings.

In an in-line coupling the pipes are inserted into the sleeve into abutment with one another, or into abutment with a stop member, and the heater elements are then energised. Upon heating of the heater elements, the adjacent regions of the sleeve are softened to the point of fusion, whereby the polymeric materials of the pipes and sleeve are fused together.

Essentially the same approach is employed for saddles and patches except that conventional means are employed to hold the elements in intimate contact prior to completion of the fusion process.
Electrofusion fittings have been successfully employed for a wide variety of applications but, due to the need to connect a power source to the electrical resistance heater element, it has not proved possible to use such fittings in joining plastics pipe used for relining existing pipe work in situ.

US Patent No 2739829 takes a slightly different approach using induction heating as opposed to resistance heating. Strips of metallic material are placed between a sleeve and pipes to be joined at two locations spaced from the abutment region of the two pipes. A coil connected to an AC source is employed to heat the metallic strips to produce fusion of the polymeric material of the sleeve with the polymeric material of the pipes. Other patents disclosing the use of induction heating in heat fusion fittings include, for example, WO80/02124, EP-A 0572546, EP-A-0513391, and US 4256945.

Heat fusion fittings are conventionally manufactured by injection moulding the entire plastics body of the fitting over the metallic heating element. This is because it is desirable to locate the heating element or elements accurately within the fitting in order to leave so-called "cold zones" or unheated areas at the ends of the fitting, and adjacent the abutment region of the pipes, in the case of an in-line coupling, to prevent escape of fused polymeric material from the melt fusion regions.

Various efforts have been made to find a more cost effective method for the manufacture of heat fusion fittings, for example, by extruding a tubular polymeric sleeve, heating the sleeve, inserting the electrical resistance heating element into the sleeve on a mandrel which simultaneously expands the sleeve, removing the mandrel and allowing the sleeve to contract around the heating element. Various methods of this type are described in Swiss Patent No 544906, DE-A-2302458, GB-A-2036518 and in US 4362684. In US 4362684 it is stated that the simultaneous widening and sliding of the tubular sleeve body onto the heating coil create radial contraction strains in the tubular body which produce welding pressure and facilitate bonding of the pipes. However, in practice, it is found that any such effects are minimal, since the radial contraction strains in the sleeve are dissipated after a very short time, and the fusion process produces only a relatively localised heating such that the main body of the sleeve remains relatively cold and could not possibly contract to produce a welding pressure as suggested in US 4362684. Further difficulties also arise in connecting electrical resistance heating elements inserted into a tubular sleeve body in this way.

For whatever reason, to the best of the Applicants' knowledge, none of the abovementioned methods have been put into practice commercially, and the method of choice for the manufacture of heat fusion fittings remains injection moulding.

In a further and separate development, for plastics pipes having improved temperature and pressure resistance, it has been proposed, for example, in US 4927184, to use a pipe wall comprising at least a layer of a cross-linked polyolefin material. Pipelines including such pipes also require higher strength fittings, and US 4927184 also suggests that the fitting can comprise an outer layer of a cross-linked polyolefin material. It is suggested that if the cross-linked outer layer of the fitting is heated, it will be subject to a contraction, exerting a pressure on the pipes, but this would appear very unlikely, as the cross-linked outer layer is not expanded, and in the heat fusion process it would remain relatively cold. It is also suggested that the fitting can be extruded, but no information is given as to how this production method could be put into practice.

It will be appreciated that all of the above proposals require a separate fitting to be formed, and none of them are suitable for joining plastics pipe used for relining existing pipework, This relining pipe may be cross-linked, and may be heat expandable, so that it can be inserted into existing pipework and then heated to cause it to expand into contact with the internal wall of the existing pipework. Methods for joining plastics pipe used for relining existing pipework are described in WO91/07272 and in GB2264765. Both of these specifications suggest electrofusion methods for joining the plastics pipe, but neither of the methods described have been found to be convenient or effective in practice. To date, no satisfactory method of joining such relining pipe in situ has yet been developed.

DE-A-3741964 discloses a cross-linked plastics article provided with a memory effect such that when the article is heated its outer dimensions are at least partly enlarged. The article is placed inside a cavity in an item to be coated internally and then heated so as to expand the article into tight contact with the internal surface concerned. The article is preferably formed from a cross-linked polyethylene compound and can have an external coating of hot melt adhesive.

According to a first aspect of the present invention, there is provided a method of joining a first plastics pipe formed from a first plastics material in which:
the first plastics pipe, at least at a first end thereof is rendered heat expandable,
a ferromagnetic heating element is positioned around the heat expandable first pipe end,
the heat expandable first pipe end is heated in order to expand the pipe end into contact with the ferromagnetic heating element and,
the first pipe end and the ferromagnetic heating element are brought into joining relationship with a second pipe end, sleeve, or fitting formed from a second plastics material and fused thereto by energising the ferromagnetic heating element by induction heating,
the ferromagnetic heating element having a Curie temperature equal to or greater than the crystalline melting point or softening point of the second plastics material of the second pipe end, sleeve or fitting.

In a second aspect, the invention provides a fusion joint for a plastics pipe manufactured using the method of the first aspect of the invention.

The method of the invention is particularly applicable to the joining of plastics pipe used for relining existing pipework and will henceforth be more particularly described in relation thereto. it will be appreciated, however, that the invention is not limited thereto, and is generally applicable to the joining of a wide range of plastics pipes in many situations, especially where the joint itself is not easily accessible.

The body of the first plastics pipe can be wholly or partly formed of cross-linked plastics material, but preferably at least an inner layer will be so formed. The pipe can, for example, be of a dual layer or multiple layer construction, with one or more outer uncross-linked layers surrounding one or more cross-linked inner layers. Such pipes can comprise, for example, various barrier layers and tie layers. Examples of barrier layers include benzene barrier layers such as nylon and PBT layers, oxygen barrier layers such as EVOH, and water barrier layers such as PVCC.

The pipe may also be extruded with corrugations or ribs on its outer surface. A pipe with a corrugated outer surface or portion thereof can enable bends to be formed along its length. On the other hand, a pipe with a ribbed outer surface can provide improved ring stiffness. An advantage of the present invention is that the pipe joint does not need to be produced with moulded- in terminals, which need has complicated and increased the cost of prior art methods. Such projecting terminals are also a serious disadvantage if the joined pipe is to be used for relining existing pipework, and in no-dig applications in which the pipe is pulled through the ground, in which the projecting terminals add considerable drag resistance.

The first plastics material is preferably a polyolefin or an olefin copolymer. Suitable polymeric materials include, for example, polymers, copolymers and polymeric blends of ethylene, propylene, butylene, pentene, styrene, butadiene, vinyl alcohols, esters and amides, vinyl halides and similar monomers. Polyethylene and ethylene copolymers are the preferred first plastics materials for use in the present invention.

The first plastics material can be cross-linked, for example, by the use of chemical cross-linking agents, for example, peroxides, silanes and similar materials, or by the use of irradiation, for example, electron beam irradiation, or UV light irradiation, using suitable cross-linking promoters, such as triallyl cyanurate. Chemical cross-linking during extrusion is the preferred route, for example, as disclosed in International Application PCT/EP96/02801.

The first plastics material is preferably cross-linked to an extent of at least 30%, preferably to an extent of from 30% to 95%. The degree of cross-linking in this specification is expressed as gel content, and measured using the method of ANSI/ASTM D2765-68. Cross linking the first plastics can, of course, improve the ring strength of the pipe and improve its heat recoverability.

The first plastics pipe end and the ferromagnetic heating element are assembled by imparting a degree of dimensional recoverability to the pipe, such that the pipe, or at least a first end thereof, can expand from a smaller diameter to a larger diameter and thereby engage the ferromagnetic heating element which is positioned in the direction of recovery. In general, the first plastics pipe end will recover from a deformed configuration, although this is by no means essential, and the pipe end can be recoverable simply due to stresses induced, for example, during extrusion. In heat recoverability, a body is deformed at a temperature above its crystalline melting point or softening point and cooled whilst in its deformed configuration. The body then retains its deformed configuration until again heated above its crystalline melting point or softening point whereupon the body will attempt to recover to its original configuration.

Not all of the first plastics pipe may need to be deformed to allow for insertion of the pipe end into the ferromagnetic heating element. For example, in producing an in-line coupling, it may only be necessary to deform the pipe end. Preferably, however, the entire first plastics pipe is rendered heat expandable, in order that the pipe can be expanded in situ to reline existing pipework. Cross-linked plastics pipe is preferred, since this can readily be heated above its crystalline melting point or softening point to induce recovery without risking melting of the pipe.

A convenient method for rendering the first plastics pipe heat expandable is by axial deformation, for example, by applying an axial extension to the pipe. Where the pipe comprises a cross-linked plastics material the axial extension force can be applied above the crystalline melting point or softening point of the first plastics material. Alternatively radial deformation can be produced by passing the heated first plastics pipe through a sizing die which has a diameter less than the undeformed diameter of the pipe. Where the entire first plastics pipe is heat expandable, the extension or deformation can be produced during the extrusion of the pipe by an in-line method. Even where the entire first plastics pipe is heat expandable, it may still be desirable to imput a further degree of extension or deformation to the first pipe end alone.

One or more ferromagnetic heating elements can be used in the method of the invention. Preferably the ferromagnetic heating element is in the form of an insert formed by embedding or partly embedding a ferromagnetic heating element in an insert plastics material. Suitable ferromagnetic heating elements are disclosed in the patent specifications mentioned hitherto, but preferably the heating element comprises a wire of copper or like conductive material covered with a ferromagnetic material as described in US4256945. The wire can be, for example, formed into a spiral with cross members, a plurality of widely spaced rings also with cross members, a mesh of widely spaced wires forming large squares, or the like. Due to the fact that the ferromagnetic material surrounds the wires in the preferred configuration, demagnetising (edge) effects are not present. Furthermore, the arrangement of a ferromagnetic material on a copper wire behaves as set forth in US 4256945, and temperature regulation is excellent and occurs incrementally along the wires so that the temperature is controlled and substantially uniform throughout. Preferred ferromagnetic heating elements are described and claimed in WO92/15182.

Preferably, the ferromagnetic heating element is of a generally tubular construction. The ferromagnetic heating element can, for example, be in the form of a wire cage, or a cage of corrugated or perforated metal. In another possibility, the ferromagnetic heating element can comprise ferromagnetic particles that are dispersed in a polymeric material, for example, as described in US5189271.

The insert is preferably formed by moulding an insert plastics material around the ferromagnetic heating element, so that the ferromagnetic heating element is embedded or partly embedded therein. Other forming methods such as casting or extruding can be used as appropriate. An advantage of the present invention is that the plastics material of the insert can be chosen to be compatible with the first plastics material of the surface layer of the first plastics pipe, and with the second plastics material of the pipe, sleeve or fitting to which it is to be joined. This can also enable two or more pipes of dissimilar materials to be joined using a single sleeve or fitting and an appropriate choice of plastics material inserts. For example, a sleeve or fitting can be used to join together cross-linked polyethylene and PVC pipes using the appropriate plastics material inserts. The ferromagnetic heating element is preferably wholly embedded in the insert plastics material, so that it is protected from damage when it is inserted into the second pipe, sleeve or fitting. It will be appreciated that the ferromagnetic heating element should have a Curie point well in excess of the crystalline melting point or softening point of the insert plastics material.

The moulding of the insert plastics material around the ferromagnetic heating element provides a reservoir of fusible material adjacent the heating element in preparation for the temperature controlled fusion step. The insert plastics material can also be shaped so that the insert is an accurate dimensional fit in the body of the second pipe, sleeve or fitting, and the moulded plastics material can be extended axially of the ferromagnetic heating element to form in-situ pre-moulded "cold zones" to contain the flow of melt from the melt region.

In a further embodiment, the insert plastics material can also have end sections moulded to perform other functions. In addition to, or instead of, providing "cold zones", the end sections of the moulded insert plastics material can, for example, be provided with internal grooves for accommodating sealing means, for example, resilient gaskets or 0-rings. Such gaskets or O-rings also have the advantage that they can help to prevent particles of dust or other contaminants from entering the melt region when the first pipe end and ferromagnetic heating element are inserted into the second pipe, sleeve or fitting. Preferably, the outer diameter of the insert is substantially equal to the inner diameter of the second pipe end, sleeve or fitting to be connected, with as small a clearance as possible consistent with the ability to push the insert into the second pipe end, sleeve or fitting by hand against any frictional resistance. The end sections of the components to be joined can of course have a reduced diameter, for example, in no-dig applications.

The ferromagnetic heating element preferably has a Curie temperature that is at least 10°C, more preferably from 20°C to 80°C greater than the crystalline melting point or softening point of the plastics materials.

The insert plastics material can comprise any of the plastics materials listed earlier in connection with the first plastics material and can be the same or different from the first plastics material. The insert plastics material can, if desired, have adhesive properties, at least in the molten state, and, for example, plastics materials comprising hot melt adhesives, for example, polyamides and ethylene/vinyl acetate polymers can also be used. The insert plastics material is preferably uncross-linked, however, or at least is cross-linked to only a small extent, preferably less than 35%, more preferably less than 5%, so that it is still capable of melt fusion. The insert plastics material is preferably uncross-linked polyethylene.

The second plastics material can also comprise any of the plastics materials listed earlier in connection with the first plastics material and can be the same or different from the first plastics material. The second plastics material is preferably uncross-linked, however, or at least is cross-linked to only a small extent, preferably less than 35%, more preferably less than 5%, so that it is still capable of melt fusion. The second plastics material is preferably uncross-linked polyethylene.

Whilst in general it is preferred that the insert produces a fusion bond to the outer surface of the first pipe and the inner surface of the body of the second pipe, sleeve or fitting, this may not be necessary in all circumstances. Thus, for example, it may not be necessary for the insert to make a full fusion bond to the inner surface of the body of the fitting where the first pipe exerts a significant recovery force on the melt region. In this case, the recovery force may be sufficient to provide the necessary joint tightness.

A preferred embodiment of the invention will now be described, by way of example only, with reference to the accompanying Drawings in which:
Figure 1 shows a sectional side elevation of a first pipe end, positioned within a sleeve and a ferromagnetic element;
Figure 2 shows a sectional side elevation of the arrangement of Figure 1 with the first pipe end expanded into the sleeve;
Figure 3 shows a sectional side elevation of a completed heat fusion joint according to the invention.

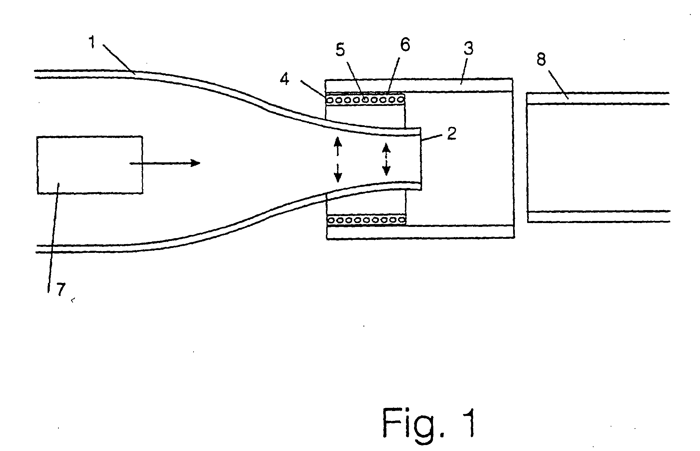

Referring firstly to Figure 1, there is shown a plastics pipe 1, formed from cross-linked polyethylene, having an end 2 positioned within a polyethylene sleeve 3. The pipe end 2 has been reduced in diameter by drawing the pipe at a temperature above its crystalline melting point and allowing the pipe end to cool in the deformed state. It will be appreciated that the entire pipe 1 may or may not be heat expandable, but at least the pipe end 2 will expand when heated to a temperature above its crystalline melting point. Within the sleeve 3, and also surrounding the pipe end 2, is an insert 4, which comprises a cage 5 comprising a coil of ferromagnetic heating wire, embedded in a fusible polyethylene material 6. The insert 4 is a press fit within the sleeve 3. Positioned within the plastics pipe 1 is a heater 7 which can be moved longitudinally along the axis of the pipe. A second pipe 8, which is to be joined to the pipe 1 by the sleeve 3, is also shown.

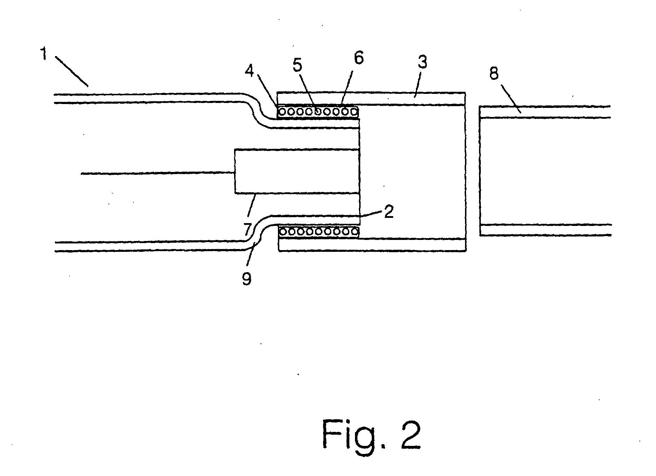

The arrangement after the pipe end 2 has been expanded is shown in Figure 2. As can be seen, the heater 7 is moved longitudinally along the plastics pipe 1 until it reaches the pipe end 2. As the pipe end 2 becomes heated, it expands in diameter until it contacts the insert 4. At this stage, although the pipe end 2, the insert 4 and the sleeve 3 are in abutting relationship, there is not yet a fusion bond between them.

In the next step of the method, the heater 7 is withdrawn and the ferromagnetic heating wire 5 energised by means of an external induction heater (not shown). The ferromagnetic heating wire 5 has a Curie point temperature which is greater than the crystalline melt temperature of the insert plastics material 6, and the polyethylene materials of the plastics pipe 1 and the sleeve 3. During the fusion process, the plastics material 6 becomes fused, and forms a temperature controlled fusion bond between the plastics pipe 1 and the sleeve 3. Extrusion of fused plastics materials from the joint region is substantially prevented by the lip 9 formed in the plastics pipe 1.

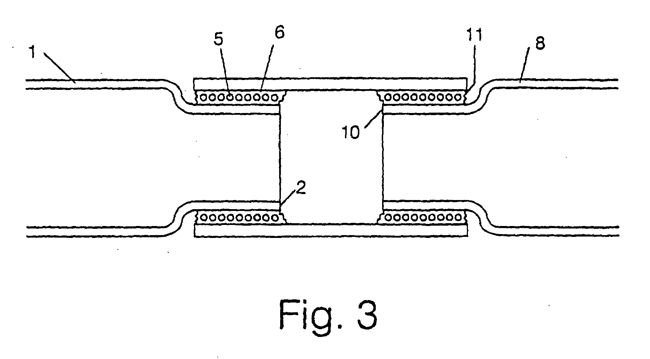

In Figure 3 there is shown a joint between plastics pipes 1 and 8 in which the above described procedure has been repeated by deforming the end 10 of the plastics pipe 8 and using a further insert 11.

Where the method of invention is used to join heat expandable plastics pipes which are inserted inside existing pipe work for relining purposes, it will be appreciated that the action of the heater 7 can expand the pipe 1 against the internal wall of the existing pipework whilst also expanding the pipe end 2 into contact with the insert 4. It remains only to energise the ferromagnetic heating wire 5 in order to complete the temperature controlled fusion joint. Alternatively, the heating of the pipe end 2 can take place as a separate step.

Whilst in the embodiment described the ferromagnetic heating wire 5 has been shown embedded in a plastics material 6, it will be appreciated that this may not be essential, and it may be possible simply to expand the plastics pipe end 2 into contact with a bare wire cage 5. In this case it would be necessary for the sleeve 3 to be formed from substantially non cross-linked polyethylene, in order to provide a reservoir of fusible material to form the fusion joint.

The invention provides an excellent and improved method for the temperature controlled induction jointing of plastics pipes.

## Claims

1. A method of joining a first plastics pipe (1) formed from a first plastics material in which:
the first plastics pipe, at least as a first end (2) thereof is rendered heat expandable,
a ferromagnetic heating element (5) is positioned around the heat expandable first pipe end (2),
the heat expandable first pipe end (2) is heated in order to expand the pipe end into contact with the ferromagnetic heating element (5) and
the first pipe end (2) and the ferromagnetic heating element (5) are brought into joining relationship with a second pipe end, sleeve, or fitting (3) formed from a second plastics material and fused thereto by energising the ferromagnetic heating element (5) by induction heating,
the ferromagnetic heating element (5) having a Curie temperature equal to or greater than the crystalline melting point or softening point of the second plastics material of the second pipe end, sleeve or fitting (3).

2. A method according to claim 1, in which the first plastics material is cross-linked or is cross-linked to an extent of from 30 to 95%.

3. A method according to claim 1 or 2 in which the first plastics material comprises polyethylene or an ethylene co-polymer.

4. A method according to any of the preceding claims, in which the first end (2) of the first plastics pipe (1) is rendered diametrically heat expandable by deforming at the temperature above the crystalline melting point or softening point of the first plastics material and cooling whilst in its deformed configuration.

5. A method according to claim 4, in which the deformation is achieved by applying an axial extension force to the first pipe end (2).

6. A method according to any of claims 1 to 4, in which the deformation of the first pipe end (2) is produced by passing the heated first plastics pipe end through a sizing die which has a diameter less than the undeformed diameter of the pipe (1).

7. A method according to any the preceding claims, in which the entire first plastics pipe (1) is rendered heat expandable.

8. A method according to any of the preceding claims, in which the ferromagnetic heating element (5) is in the form of an insert (4) formed by embedding or partly embedding a ferromagnetic heating element in an insert plastics material (6).

9. A method according to any of the preceding claims, in which the ferromagnetic heating element (5) comprises a wire of copper or like conductive material covered with a ferromagnetic material or in which the ferromagnetic heating element (5) comprises a wire cage, or a cage of corrugated or perforated metal.

10. A method according to any of the preceding claims, in which the insert (4) is formed by moulding an insert plastics material (6) around the ferromagnetic heating element (5).

11. A method according to claim 10, in which the insert plastics material (6) is extended axially of the ferromagnetic heating element to form in-situ pre-moulded "cold zones" to contain the flow of fused plastics material from the fusion region.

12. A method according to any of the preceding claims, in which the ferromagnetic heating element (5) has a Curie temperature that is from 20° to 80° greater than the crystalline melting point or softening point of the first and second plastics materials and the insert plastics material.

13. A method according to any of claims 8 to 12, in which the insert plastics material (6) comprises uncross-linked polyethylene.

14. A method according to any of the preceding claims, in which the second plastics material comprises uncross-linked polyethylene.

15. A method according to any of the preceding claims, wherein the first plastics pipe (1), and the second plastics pipe, sleeve or fitting, (3) comprise sections or components of relining pipe for relining existing pipework.

## Patentansprüche

1. Verfahren zum Verbinden eines aus einem ersten Kunststoffmaterial gebildeten ersten Kunststoffrohrs (1), bei dem:
- das erste Kunststoffrohr wenigstens an einem ersten Ende (2) wärmedehnbar ausgebildet ist,
- ein ferromagnetisches Heizelement (5) um das wärmedehnbare erste Rohrende (2) angeordnet ist,
- das wärmedehnbare erste Rohrende (2) erwärmt wird, um das Rohrende in Kontakt mit dem ferromagnetischen Heizelement (5) auszudehnen, und
- das erste Rohrende (2) und das ferromagnetische Heizelement (5) in ein Verbindungsverhältnis mit einem zweiten Rohrende, einer Hülse oder einem Fitting (3) gebracht werden, das aus einem zweiten Kunststoffmaterial besteht und durch Aktivieren des ferromagnetischen Heizelements (5) durch Induktionserwärmung mit diesem verschmolzen wird,
- das ferromagnetische Heizelement (5) eine Curie-Temperatur aufweist, die gleich dem oder größer als der kristallinische Schmelzpunkt oder der Erweichungspunkt des zweiten Kunststoffmaterials des zweiten Rohrendes, der Hülse oder des Fittings (3) ist.

2. Verfahren nach Anspruch 1, bei dem das erste Kunststoffmaterial vernetzt oder in einem Ausmaß von 30 bis 95% vernetzt ist.

3. Verfahren nach Anspruch 1 oder 2, bei dem das erste Kunststoffmaterial Polyethylen oder ein Ethylen-Copolymer aufweist.

4. Verfahren nach einem der vorhergehenden Ansprüche, bei dem das erste Ende (2) des ersten Kunststoffrohrs (1) diametral wärmedehnbar ausgebildet wird, indem es bei einer Temperatur über dem kristallinischen Schmelzpunkt oder dem Erweichungspunkt des ersten Kunststoffmaterials verformt und in der verformten Konfiguration gekühlt wird.

5. Verfahren nach Anspruch 4, bei dem die Verformung durch Aufbringen einer axialen Dehnkraft auf das erste Rohrende (2) erreicht wird.

6. Verfahren nach einem der Ansprüche 1-4, bei dem die Verformung des ersten Rohrendes (2) durch Führen des erwärmten ersten Kunststoffrohrendes durch eine Kalibrierform erfolgt, deren Durchmesser kleiner als der Durchmesser des nicht verformten Rohres (1) ist.

7. Verfahren nach einem der vorhergehenden Ansprüche, bei dem das gesamte erste Kunststoffrohr (1) wärmedehnbar ausgebildet ist.

8. Verfahren nach einem der vorhergehenden Ansprüche, bei dem das ferromagnetische Heizelement (5) ein Einsatz (4) ist, der durch Einbetten oder teilweises Einbetten eines ferromagnetischen Heizelements in ein Einsatzkunststoffmaterial (6) gebildet ist.

9. Verfahren nach einem der vorhergehenden Ansprüche, bei dem das ferromagnetische Heizelement (5) einen Draht aus Kupfer oder dergleichen leitfähigem Material aufweist, das mit einem ferromagnetischen Material beschichtet ist, oder bei dem das ferromagnetische Heizelement (5) einen Drahtkäfig oder einen Käfig aus gewelltem oder perforiertem Metall aufweist.

10. Verfahren nach einem der vorhergehenden Ansprüche, bei dem der Einsatz (4) durch Gießen eines Einsatzkunststoffmaterials (6) um das ferromagnetische Heizelement (5) gebildet ist.

11. Verfahren nach Anspruch 10, bei dem das Einsatzkunststoffmaterial (6) axial zum ferromagnetischen Heizelement verlängert wird, um vor Ort vorgeformte "Kaltzonen" zu bilden, welche den Fluß des geschmolzenen Kunststoffmaterials aus dem Schmelzbereich eingrenzen.

12. Verfahren nach einem der vorhergehenden Ansprüche, bei dem das ferromagnetische Heizelement (5) eine Curie-Temperatur hat, die zwischen 20° und 80° höher als der kristallinische Schmelzpunkt oder der Erweichungspunkt des ersten und des zweiten Kunststoffmaterials und des Einsatzkunststoffmaterials ist.

13. Verfahren nach einem der Ansprüche 8 bis 12, bei dem das Einsatzkunststoffmaterial (6) nicht vernetztes Polyethylen aufweist.

14. Verfahren nach einem der vorhergehenden Ansprüche, bei dem das zweite Kunststoffmaterial nicht vernetztes Polyethylen aufweist.

15. Verfahren nach einem der vorhergehenden Ansprüche, bei dem das erste Kunststoffrohr (1) und das zweite Kunststoffrohr, die Hülse oder der Fitting (3), Abschnitte oder Elemente von Neuauskleidungsrohren zum Neuauskleiden bestehender Rohrleitungen aufweisen.

## Revendications

1. Procédé de raccordement d'un premier tuyau (1) en plastique constitué à partir d'un premier matériau en plastique, dans lequel :
le premier tuyau en plastique, en au moins une première extrémité (2), est rendu dilatable à la chaleur,
un élément ferromagnétique chauffant (5) est positionné autour de la première extrémité (2) de tuyau dilatable à la chaleur,
la première extrémité (2) de tuyau dilatable à la chaleur est chauffée de façon à ce que l'extrémité du tuyau se dilate au contact de l'élément ferromagnétique chauffant (5) et
la première extrémité (2) de tuyau et l'élément ferromagnétique chauffant (5) sont amenés à se raccorder à une deuxième extrémité de tuyau, à un manchon, ou à un raccord (3) constitué à partir d'un deuxième matériau en plastique et se fondent à celui-ci par excitation de l'élément ferromagnétique chauffant (5) par chauffage par induction,
l'élément ferromagnétique chauffant (5) ayant un point de Curie égal ou supérieur au point de fusion cristallin ou au point de ramollissement du deuxième matériau en plastique de la deuxième extrémité de tuyau, du manchon ou du raccord (3).

2. Procédé selon la revendication 1, dans lequel le premier matériau en plastique est réticulé ou est réticulé avec un taux compris entre 30% et 95%.

3. Procédé selon la revendication 1 ou 2, dans lequel le premier matériau en plastique comprend du polyéthylène ou un copolymère à base d'éthylène.

4. Procédé selon l'une quelconque des revendications précédentes, dans lequel la première extrémité (2) du premier tuyau (1) en plastique est rendue diamétralement dilatable à la chaleur en se déformant à la température supérieure au point de fusion cristallin ou au point de ramollissement du premier matériau en plastique et en se refroidissant pendant qu'elle est dans sa configuration déformée.

5. Procédé selon la revendication 4, dans lequel la déformation est obtenue en appliquant une force d'élongation à la première extrémité (2) de tuyau.

6. Procédé selon l'une quelconque des revendications 1 à 4, dans lequel la déformation de la première extrémité (2) de tuyau est obtenue en faisant passer la première extrémité de tuyau plastique chauffée à travers une matrice de calibrage dont le diamètre est inférieur au diamètre non déformé du tuyau (1).

7. Procédé selon l'une quelconque des revendications précédentes, dans lequel la totalité du premier tuyau (1) en plastique est rendue dilatable à la chaleur.

8. Procédé selon l'une quelconque des revendications précédentes, dans lequel l'élément ferromagnétique chauffant (5) se présente sous forme d'un insert (4) formé en enrobant complètement ou partiellement un élément ferromagnétique chauffant dans un matériau plastique (6) d'insert.

9. Procédé selon l'une quelconque des revendications précédentes, dans lequel l'élément ferromagnétique chauffant (5) comprend un fil de cuivre ou un matériau conducteur similaire recouvert d'un matériau ferromagnétique ou dans lequel l'élément ferromagnétique chauffant (5) comprend une gaine en fil, ou une gaine en métal perforé ou en tôle ondulée.

10. Procédé selon l'une quelconque des revendications précédentes, dans lequel l'insert (4) est formé en moulant un matériau plastique (6) d'insert autour de l'élément ferromagnétique chauffant (5).

11. Procédé selon la revendication 10, dans lequel le matériau plastique (6) d'insert est allongé axialement par rapport à l'élément ferromagnétique chauffant pour former in - situ des "zones froides" pré moulées contenant la masse de matériau plastique. fondue provenant de la région de fusion.

12. Procédé selon l'une quelconque des revendications précédentes, dans lequel l'élément ferromagnétique chauffant (5) a un point de Curie supérieur de 20° à 80° au point de fusion cristallin ou au point de ramollissement des premier et deuxième matériaux en plastique et du matériau plastique d'insert.

13. Procédé selon l'une quelconque des revendications 8 à 12, dans lequel le matériau plastique (6) d'insert comprend du polyéthylène non réticulé.

14. Procédé selon l'une quelconque des revendications précédentes, dans lequel le deuxième matériau plastique comprend du polyéthylène non réticulé.

15. Procédé selon l'une quelconque des revendications précédentes, dans lequel le premier tuyau en plastique (1), et le deuxième tuyau en plastique, manchon ou raccord (3) comprennent des parties ou des composants destinés à regarnir les tuyaux de la tuyauterie existante.
